# EUROPÄISCHE PATENTSCHRIFT

(11) **EP 2 236 358 B1**
(45) Veröffentlichungstag und Bekanntmachung des Hinweises auf die Patenterteilung: **31.08.2011**
(21) Anmeldenummer: 09157281.8
(22) Anmeldetag: 03.04.2009
(51) Int. Cl.: B60R 13/08, B60R 16/02, B62D 29/00

(54) **Element zur Abdichtung oder Verstärkung eines Hohlraumes und Verfahren zur Einbringung eines Durchdringungselementes in ein solches Element**
Element for sealing or strengthening of a cavity and method for introducing a penetration element in such an element
Élément d'étanchéité ou le renforcement d'une cavité et les procédures de l'introduction d'un élément de pénétration dans un tel élément

(43) Veröffentlichungstag der Anmeldung: 06.10.2010
(73) Patentinhaber: Sika Technology AG, 6340 Baar (CH)
(72) Erfinder: Lehmann, Marco, 8048 Zürich (CH); Brichet, Nicolas, 8047 Zürich (CH); Meister, Marcel, 8182 Hochfelden (CH); Koller, Michael, 5312 Döttingen (CH)
(74) Vertreter: Sika Patent Attorneys

(56) Entgegenhaltungen:
- EP-A- 1 323 588
- WO-A-01/24989
- WO-A-01/42055
- WO-A-97/31415

## Beschreibung

### Technisches Gebiet

Die Erfindung geht aus von einem Element zur Abdichtung oder Verstärkung eines Hohlraumes nach dem Oberbegriff des ersten Anspruches.

Die Erfindung geht ebenfalls aus von einem Verfahren zur Einbringung eines Durchdringungselementes in ein solches Element nach dem Oberbegriff des unabhängigen Verfahrensanspruches.

### Stand der Technik

Vielfach weisen Bauelemente, wie Karosserien und/oder Rahmen von Transport- und Fortbewegungsmitteln, insbesondere von Fahrzeugen zu Wasser oder zu Land oder von Luftfahrzeugen, Hohlräume auf, insbesondere um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das leichtes Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmäßige Form oder ein enges Ausmaß auf, wodurch es erschwert wird, sie richtig abzudichten, zu verstärken und zu dämpfen. Insbesondere im Automobilbau werden deshalb Abdichtungselemente (Englisch: Baffle) verwendet, um Hohlräume abzudichten und/ oder akustisch abzuschotten, oder Verstärkungselemente (Englisch: Reinforcer) verwendet, um Hohlräume zu verstärken.

Wenn nun Durchdringungselemente wie Schläuche, Leitungen, usw. durch solche Abdichtungselement oder Verstärkungselemente hindurchgeführt werden müssen, gibt es verschiedene Lösungen.

Grundsätzlich sind alle derzeit bekannten Systeme jedoch relativ kompliziert und es ist aufwendig, das Durchdringungselement in das Abdichtungselement einzubauen. Zudem ist es schwierig eine genügende Abdichtung zu gewährleisten.

Ein gattungsgemäßen Element ist aus der WO01/24985 A bekannt.

### Darstellung der Erfindung

Der Erfindung liegt die Aufgabe zugrunde, bei einem Element zur Abdichtung oder Verstärkung eines Hohlraumes der eingangs genannten Art die Nachteile des Standes der Technik zu vermeiden und ein verbessertes Element zur Verfügung zu stellen.

Erfindungsgemäss wird dies durch die Merkmale des ersten bzw. zehten Anspruches erreicht.

Kern der Erfindung ist es also, dass am Trägerelement ein Flügel angeordnet ist, dass die Öffnung seitlich offen ist, und dass am Flügel ein Mitnehmer angeordnet ist, welcher beim Einführen des Durchdringungselementes den Flügel bewegt.

Die Vorteile der Erfindung sind unter anderem darin zu sehen, dass mit dem neuen Element, dass im geöffneten Zustand angeliefert wird, der Flügel durch den Mitnehmer beim Einführen des Durchdringungselementes automatisch geschlossen wird. Somit ist im Gegensatz zum Stand der Technik nur ein Arbeitsschritt nötig, was den Einbau vereinfacht und die Kosten senkt.

Weitere vorteilhafte Ausgestaltungen der Erfindung ergeben sich aus den Unteransprüchen. Besonders vorteilhaft ist es, den schäumbaren Teil aus schäumbaren Material auszugestalten, so dass das Durchdringungselement ganz umschäumt wird.

### Kurze Beschreibung der Zeichnung

Im folgenden werden anhand der Zeichnungen Ausführungsbeispiele der Erfindung näher erläutert. Gleiche oder gleichwirkende Elemente sind in den verschiedenen Figuren mit den gleichen Bezugszeichen versehen. Die Bewegungsrichtung des Durchdringungselementes beim Einbau ist mit Pfeilen dargestellt.

Es zeigen:
- Fig. 1: eine Draufsicht auf ein erfindungsgemässes geöffnetes Abdichtungselement;
- Fig. 2: eine Draufsicht auf die andere Seite des erfindungsgemässe geöffneten Abdichtungselementes aus Fig. 1;
- Fig. 3A: eine Draufsicht auf ein erfindungsgemässes Abdichtungselement mit Durchdringungselement nicht eingeführt;
- Fig. 3B: eine Draufsicht auf ein erfindungsgemässes Abdichtungselement mit Durchdringungselement im Mitnehmer positioniert;
- Fig. 3C: eine Draufsicht auf ein erfindungsgemässes Abdichtungselement mit Durchdringungselement in die Öffnung eingeführt;
- Fig. 4: eine Draufsicht auf ein erfindungsgemässes geschlossenes Abdichtungselement mit Durchdringungselement;
- Fig. 5: eine Draufsicht auf die andere Seite des erfindungsgemässe geschlossenen Abdichtungselementes mit Durchdringungselement aus Fig. 4.

Es sind nur die für das unmittelbare Verständnis der Erfindung wesentlichen Elemente gezeigt.

### Weg zur Ausführung der Erfindung

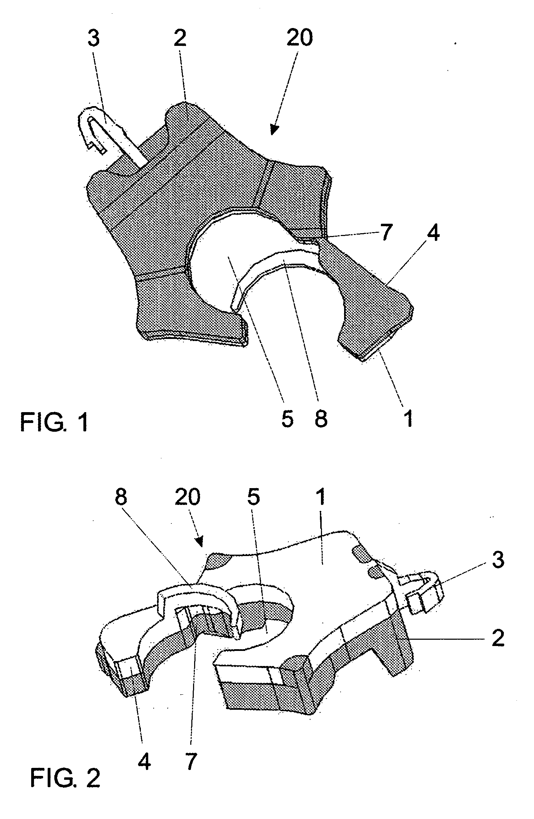

In Fig. 1, 2 und 3 ist ein Element 20 dargestellt, welches als Abdichtungselement oder Verstärkungselement verwendet werden kann. Nicht dargestellt ist, dass dieses in einem Hohlraum, insbesondere in Karosserien und/oder Rahmen von Transport- und Fortbewegungsmitteln, insbesondere von Fahrzeugen zu Wasser oder zu Land oder von Luftfahrzeugen, angeordnet wird, besonders vorteilhaft in einer Säule der Karosserie des Fahrzeuges. Es versteht sich jedoch von selbst, dass ein solches Element 20 in jeglichem Hohlraum angeordnet werden kann. Das Element 20 umfasst ein Trägerelement 1, im folgenden auch Trägerteil genannt, und ein oder mehrere Teile 2 aus einem schäumbaren Material. Solche schäumbaren Materialien werden weiter unten im Detail beschrieben.

Das schäumbare Material 2 kann am Trägerteil 1 aufgetragen bzw. befestigt sein. Dieses Trägerteil kann aus beliebigen Materialien bestehen, welche weiter unten im Detail beschrieben sind. Zudem ist weiter unten die Herstellung des Elementes 20 im Detail beschrieben. Das schäumbare Teil kann dabei das Trägerteil ganz oder nur teilweise bedecken und in mehrere Teile aufgeteilt sein.

Das Trägerteil 1 des Elements 20 kann weiterhin mindestens ein Befestigungsmittel 3, insbesondere einen Clip, zur Befestigung und Platzierung des Verstärkungselements in einem Hohlraum aufweisen. Die Befestigung des Verstärkungselements mit einem Clip eignet sich insbesondere für Anwendungen, bei welchen die gesamte Oberfläche des Bauteils, also auch die Hohlraum-Innenwand, beispielsweise für eine Tauchlackierung erreichbar sein muss. In solchen Fällen ist eine Befestigung beispielsweise durch Verkleben nicht geeignet, da der Lack die Stelle der Verklebung nicht erreichen kann.

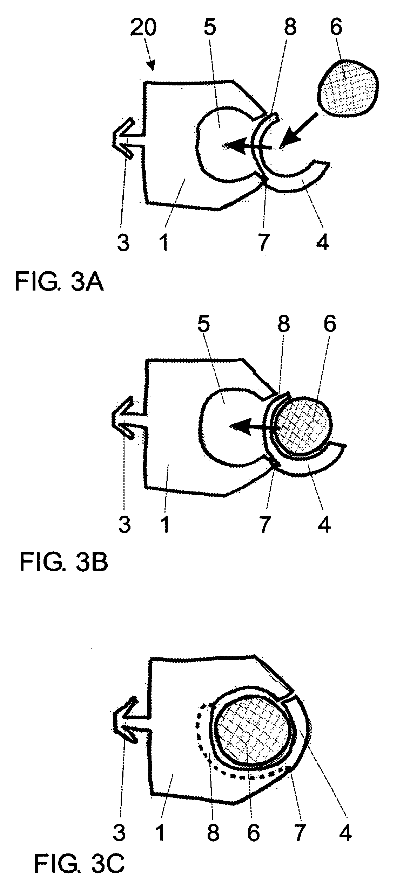

Das Trägerteil 1 weist eine seitlich offene Öffnung 5 auf, in die ein Durchdringungselement 6, dargestellt in Fig. 3, 4 und 5, eingeführt werden kann. Das Durchdringungselement ist bevorzugt ein röhrenförmiges Element, besonders bevorzugt ein Schlauch, insbesondere ein Wasserschlauch. Die Öffnung 5 wird dabei vorzugsweise im wesentlichen der Aussengeometrie des Durchdringungselementes angepasst, so dass bei eingebrachtem Durchdringungselement dieses in der Öffnung 5 gehalten wird. Zudem ist vorteilhafterweise das schäumbare Material im Bereich der Öffnung 5 so angeordnet, dass beim Schäumen des schäumbaren Materials das Durchdringungselement und somit die Öffnung 5 vorteilhafterweise verschlossen wird. Bei röhrenförmigen Durchdringungselementen ist die Öffnung 5 vorteilhafterweise rund ausgestaltet.

Am Trägerteil 1 ist ein Flügel 4 angeordnet, welcher die teilweise offene Öffnung 5 verschliessen kann, so dass das Durchdringungselement 6 in der Öffnung 5 gehalten wird. Der Flügel 4 ist mittels eines Scharniers 7 mit dem Trägerteil 1 verbunden. Das Scharnier kann an sich beliebig ausgestaltet sein. Besonders vorteilhaft ist jedoch, den Flügel aus dem gleichen Material wie das Trägerteil auszugestalten und das Scharnier über eine dünnwandige Verbindung, ein sogenanntes Filmscharnier, auszubilden. Dadurch kann das Trägerteil und der Flügel im gleichen Takt des Spritzgussverfahrens hergestellt werden. Falls der Flügel aus einem anderen Material als das Trägerteil hergestellt wird, kann das Scharnier auch nach bekannter Art, z.B. mit Buchsen die mit einem Stift verbunden werden, ausgestaltet sein.

Am Flügel 4 ist ein Mitnehmer 8 angeordnet, welcher dazu dient beim Einführen des Durchdringungselementes 6 in die Öffnung 5 den Flügel mitzunehmen und die Öffnung 5 mittels des Flügels zu schliessen. Der Mitnehmer 8 kann aus beliebigen Materialien hergestellt werden und am Flügel befestigt werden. Als besonders vorteilhafte Lösung besteht der Mitnehmer jedoch wie in den Figuren dargestellt aus dem gleichen Material wie der Flügel 4 und wird direkt mit dem Flügel hergestellt, insbesondere spritzgegossen. Der Mitnehmer kann auch aus schäumbarem Material hergestellt werden, wenn dieses genügende mechanische Eigenschaften aufweist und falls zusätzliches schäumbares Material im Bereich der Öffnung 5 benötigt wird, wodurch beim Schäumen allfällige Spalten zwischen Durchdringungselement und Trägerteil zusätzlich verschlossen werden können.

In den Figuren 3A bis 3C ist schematisch dargestellt, wie das Durchdringungselement in die Öffnung 5 des Abdichtungselementes 20 eingeführt wird. Gemäss Fig. 3A wird das Abdichtungselement 20 in geöffnetem Zustand produziert und angeliefert.

Gemäss Fig. 3B wird das Durchdringungselement 6 in den Mitnehmer 8 und den Flügel 4 positioniert und dann gemäss Fig. 3C in die Öffnung 5 dort wo die Öffnung seitliche offen ist gedrückt. Der offene Flügel 4 wird durch den Mitnehmer 8 automatisch geschlossen. Durch den Mitnehmer wird der Flügel in der geschlossenen Position gehalten, da der Mitnehmer das Durchdringungselement umfasst.

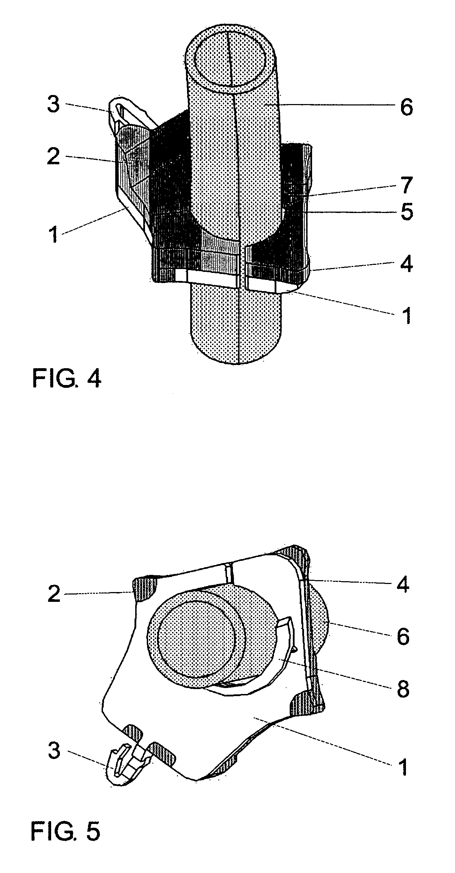

In Fig. 4 und 5 ist das erfindungsgemässe geschlossene Abdichtungselement mit Durchdringungselement nochmals im Detail dargestellt. Deutlich ist ersichtlich wie bei der hier besonders bevorzugten Ausführung das Durchdringungselement in der Öffnung 5 mittels des Mitnehmers 8 gehalten wird.

Nicht dargestellt ist, dass am Flügel und am Trägerteil eine Verriegelungsvorrichtung angeordnet werden kann, welche zusätzlich zum Mitnehmer verhindert, dass sich der Flügel wieder öffnet und das Durchdringungselement herausfällt.

Zusätzlich ist es besonders vorteilhaft, wie dies auch in den Figuren dargestellt ist, die Öffnung 5 so auszugestalten, dass das Durchdringungselement auch ohne den Flügel 4 und den Mitnehmer gehalten wird. Die Öffnung 5 ist somit vorteilhafterweise seitlich nur soweit offen, dass das Durchdringungselement gerade noch in die Öffnung gepresst werden kann, die seitlich offene Öffnung aber nach dem hineinpressen das Durchdringungselement zumindest teilweise, insbesondere über mehr als den halben Umfang, umschliesst, so dass es gehalten wird.

Schäumbare Materialien:

Als schäumbares Material 2 kann grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.

Ein solches schäumbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird das schäumbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen. Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160 °C, insbesondere von 80 °C bis 150 °C, bevorzugt von 90 °C bis 140 °C, schäumbar.

Als schäumbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Neben Epoxid-Festharzen eignen sich auch kristalline Polyepoxide wie Triglycidylisocyanurate, Terephthalsäurediglycidylether, Gemische aus Terephthalsäurediglycidylether mit Trimellitsäuretriglycidylether , Hydrochinondiglycidylether sowie Addukte aus Trimethylolpropandiglycidylether mit Diisocyanaten wie 4,4'-, 2,4'- und 2,2'-Diphenylmethandiisocyanat (MDI), 2,4-und 2,6-Toluylendiisocyanat (TDI) oder 1-Isocyanato-3,3,5-trimethyl-5-isocyanatomethyl-cyclohexan (IPDI).

Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete schäumbare Materialien sind Treibmittel enthaltende einkomponentige Polyurethanzusammensetzungen aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als schäumbare Materialien Treibmittel enthaltende zweikomponentige Epoxid/Polyurethan-Zusammensetzungen, wie sie beispielsweise beschrieben sind in WO 2005/080524 A1, dessen Offenbarung hiermit eingeschlossen ist.

Ebenfalls geeignete schäumbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und

US 5,373,027 beschrieben, deren Offenbarung hiermit eingeschlossen ist. Solche schäumbaren Materialien sind für die vorliegende Erfindung besonders bevorzugt.

Als schäumbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470, dessen Offenbarung hiermit eingeschlossen ist.

### Trägermaterial

Das Trägerteil kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann das Trägerteil 1 einen beliebigen Aufbau und eine beliebige Struktur aufweisen. Es kann beispielsweise massiv, hohl, oder geschäumt sein oder eine gitterartige Struktur aufweisen. Die Oberfläche des Trägerteils kann typischerweise glatt, rau oder strukturiert sein.

Das Trägerteil 1 kann zusätzlich zur seiner Funktion als Träger für das schäumbare Material zur strukturellen Verstärkung oder zur Abdichtung des Bauteils oder auch zur Geräuschdämmung beitragen.

Bei erfindungsgemässen Abdichtungs- und Verstärkungselementen, bei welchen sich das schäumbare Material auf einem Trägerteil befindet, unterscheidet sich das Herstellungsverfahren dementsprechend, ob das Trägerteil aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerteil, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das schäumbare Material, wird mit einem zweiten Spritzaggregat an die erste Komponente angespritzt. Besteht das Trägerteil aus einem Material, welches sich nicht durch das Spritzgussverfahren herstellen lässt, also beispielsweise aus einem Metall, wird das Trägerteil in ein entsprechendes Werkzeug gelegt und das schäumbare Material wird an das Trägerteil angespritzt.

Selbstverständlich besteht auch die Möglichkeit das schäumbare Material durch beliebige andere Befestigungsmittel oder verfahren an ein Trägerteil zu befestigen.

### Bezugszeichenliste

- 1: Trägerelement, -teil
- 2: schäumbares Element / Teil
- 3: Befestigungselement
- 4: Flügel
- 5: Öffnung
- 6: Flügel
- 7: Scharnier
- 8: Mitnehmer
- 20: Element

## Patentansprüche

1. Element (20) zur Abdichtung oder Verstärkung eines Hohlraumes eines Bauelementes, insbesondere eines Fahrzeuges, wobei das Element ein Trägerelement (1), ein schäumbares Element (2), sowie eine Öffnung (5) zur Aufnahme eines Durchdringungselementes (6) umfasst,
**dadurch gekennzeichnet,**
**dass** am Trägerelement (1) ein Flügel (4) angeordnet ist, dass die Öffnung (5) seitlich offen ist, und dass am Flügel ein Mitnehmer (8) angeordnet ist, welcher beim Einführen des Durchdringungselementes (6) den Flügel bewegt.

2. Element (20) nach Anspruch 1,
**dadurch gekennzeichnet,**
**dass** der Flügel (4) mittels eines Scharniers (7), insbesondere einem Filmscharnier, am Trägerelement (1) befestigt ist.

3. Element (20) nach Anspruch 1 oder 2,
**dadurch gekennzeichnet,**
**dass** der Flügel (4) mittels des Mitnehmers (8) in geschlossener Position gehalten ist und / oder dass am Trägerelement (1) zusätzlich eine Verriegelungsvorrichtung zur Verriegelung des Flügels (4) am Träger angeordnet ist.

4. Element (20) nach Anspruch 1, 2 oder 3,
**dadurch gekennzeichnet,**
**dass** das die seitlich offene Öffnung (5) ein Durchdringungselement (6) mehr als um seinen halben Umfang umschliesst.

5. Element (20) nach einem der vorhergehenden Ansprüche,
**dadurch gekennzeichnet,**
**dass** das schäumbare Element (2) aus schäumbaren Material besteht, welches das Trägerelement (1) ganz oder teilweise bedeckt.

6. Element (20) nach einem der vorhergehenden Ansprüche,
**dadurch gekennzeichnet,**
**dass** das schäumbare Material thermisch, bei einer Temperatur von ≤ 160 °C, insbesondere von 80 °C bis 150 °C, bevorzugt von 90 °C bis 140 °C, schäumbar ist.

7. Element (20) nach einem der vorhergehenden Ansprüche,
**dadurch gekennzeichnet,**
**dass** das Trägerelement und / oder der Flügel (4) und / oder der Mitnehmer (8) aus einem Kunststoff, insbesondere Polyurethan oder Polyamid, oder aus einem Metall, insbesondere Aluminium oder Stahl oder aus einer Kombination von Kunststoff und Metall aufgebaut ist.

8. Element (20) nach einem der vorhergehenden Ansprüche,
**dadurch gekennzeichnet,**
**dass** das Trägerteil ein Befestigungsmittel (5), insbesondere einen Clip, zur Platzierung und zur Befestigung des Verstärkungselements in einem Hohlraum aufweist.

9. Verwendung gemäss einem der Ansprüche 1 bis 8 zur Verstärkung in Hohlräumen von strukturellen Bauteilen in Karosserien und/oder Rahmen von Transport- und Fortbewegungsmitteln, insbesondere von Fahrzeugen zu Wasser oder zu Land oder von Luftfahrzeugen, bevorzugt von Automobilen, Lastkraftwagen, Eisenbahnwagen, Booten, Schiffen, Hubschraubern und Flugzeugen.

10. Verfahren zur Einbringung eines Durchdringungselementes in ein Element (20) zur Abdichtung oder Verstärkung eines Hohlraumes eines Bauelementes, insbesondere eines Fahrzeuges, wobei das Element ein Trägerelement (1), ein schäumbares Teil (2), sowie eine Öffnung (5) zur Aufnahme des Durchdringungselementes (6) umfasst,
**dadurch gekennzeichnet,**
**dass** am Trägerelement (1) ein Flügel (4) angeordnet ist, dass die Öffnung (5) seitlich offen ist, und dass am Flügel ein Mitnehmer (8) angeordnet ist,
**dass** das Durchdringungselement (6) in den Flügel und den Mitnehmer eingeführt wird,
**dass** das Durchdringungselement in die seitlich offene Öffnung (5) gedrückt wird, wodurch durch den Mitnehmer (8) der Flügel (4) mitgenommen und die seitlich offene Öffnung durch den Flügel geschlossen wird.

11. Verfahren nach Anspruch 10,
**dadurch gekennzeichnet,**
**dass** die seitlich offene Öffnung (5) das Durchdringungselement (6) mehr als um seinen halben Umfang umschliesst.

12. Verfahren nach Anspruch 10 oder 11,
**dadurch gekennzeichnet,**
**dass** der Flügel (4) durch den Mitnehmer (8) in geschlossener Position gehalten wird.

13. Verfahren nach Anspruch 10, 11 oder 12,
**dadurch gekennzeichnet,**
**dass** das Durchdringungselement ein rohrförmiges Element, insbesondere ein Schlauch ist.

## Claims

1. Element (20) for sealing or reinforcing a cavity of a structural element, in particular of a vehicle, the element comprising a base element (1), a foamable element (2), and an opening (5) for receiving a penetrating element (6), **characterized in that** a wing (4) is arranged on the base element (1), **in that** the opening (5) is open at the side, and **in that** a catch (8) which moves the wing when the penetrating element (6) is introduced is arranged on the wing.

2. Reinforcing system according to Claim 1, **characterized in that** the wing (4) is fastened to the base element (1) by means of a hinge (7), in particular a film hinge.

3. Reinforcing system according to Claim 1 or 2, **characterized in that** the wing (4) is held in the closed position by means of the catch (8) and/or **in that** additionally arranged on the base element (1) is a locking device for locking the wing (4) on the base.

4. Reinforcing system according to Claim 1, 2 or 3, **characterized in that** the opening (5) that is open at the side encloses a penetrating element (6) around more than half its circumference.

5. Reinforcing system according to one of the preceding claims, **characterized in that** the foamable element (2) consists of foamable material, which covers the base element (1) entirely or partially.

6. Reinforcing system according to one of the preceding claims, **characterized in that** the foamable material can be foamed thermally, at a temperature of ≤ 160°C, in particular of 80°C to 150°C, preferably of 90°C to 140°C.

7. Reinforcing system according to one of the preceding claims, **characterized in that** the base element and/or the wing (4) and/or the catch (8) is constructed from a plastic, in particular polyurethane or polyamide, or from a metal, in particular aluminium or steel, or from a combination of plastic and metal.

8. Reinforcing system according to one of the preceding claims, **characterized in that** the base part has a fastening means (5), in particular a clip, for the placement and fastening of the reinforcing element in a cavity.

9. Use according to one of Claims 1 to 8 for reinforcement in cavities of structural components in bodies and/or frames of means of transport and means of transportation, in particular of vehicles on water or on land, or of aircraft, preferably of automobiles, trucks, railway carriages, boats, ships, helicopters and aeroplanes.

10. Method for introducing a penetrating element into an element (20) for sealing or reinforcing a cavity of a structural element, in particular of a vehicle, the element comprising a base element (1), a foamable element (2), and an opening (5) for receiving the penetrating element (6), **characterized in that** a wing (4) is arranged on the base element (1), **in that** the opening (5) is open at the side, and **in that** a catch (8) is arranged on the wing, **in that** the penetrating element (6) is introduced into the wing and the catch and **in that** the penetrating element is pressed into the opening (5) that is open at the side, whereby the wing (4) is taken along by the catch (8) and the opening that is open at the side is closed by the wing.

11. Method according to Claim 10, **characterized in that** the opening (5) that is open at the side encloses the penetrating element (6) over more than half its circumference.

12. Method according to Claim 10 or 11, **characterized in that** the wing (4) is held in the closed position by the catch (8).

13. method according to Claim 10, 11 or 12, **characterized in that** the penetrating element is a tubular element, in particular a hose.

## Revendications

1. Elément (20) pour l'étanchéité ou le renforcement d'une cavité d'un élément de construction, en particulier d'un véhicule, dans lequel l'élément comprend un élément de support (1), un élément moussant (2), ainsi qu'une ouverture (5) destinée à recevoir un élément de pénétration (6), **caractérisé en ce qu'**une aile (4) est disposée sur l'élément de support (1), **en ce que** l'ouverture (5) est ouverte latéralement, et **en ce qu'**un entraîneur (8) est disposé sur l'aile et déplace l'aile lors de l'introduction de l'élément de pénétration (6).

2. Elément (20) selon la revendication 1, **caractérisé en ce que** l'aile (4) est fixée à l'élément de support (1) au moyen d'une charnière (7), en particulier d'une charnière pelliculaire.

3. Elément (20) selon la revendication 1 ou 2, **caractérisé en ce que** l'aile (4) est maintenue en position fermée au moyen de l'entraîneur (8) et/ou **en ce qu'**un dispositif de verrouillage destiné au verrouillage de l'aile (4) sur le support est disposé en plus sur l'élément de support (1).

4. Elément (20) selon la revendication 1, 2 ou 3, **caractérisé en ce que** l'ouverture (5) ouverte latéralement entoure un élément de pénétration (6) sur plus de la moitié de sa périphérie.

5. Elément (20) selon l'une quelconque des revendications précédentes, **caractérisé en ce que** l'élément moussant (2) se compose d'un matériau expansible, qui recouvre entièrement ou partiellement l'élément de support (1).

6. Elément (20) selon l'une quelconque des revendications précédentes, **caractérisé en ce que** le matériau moussant peut mousser thermiquement, à une température de ≤ 160°C, en particulier de 80°C à 150°C, et de préférence encore de 90°C à 140°C.

7. Elément (20) selon l'une quelconque des revendications précédentes, **caractérisé en ce que** l'élément de support et/ou l'aile (4) et/ou l'entraîneur (8) est fabriqué en une matière plastique, en particulier en polyuréthane ou en polyamide, ou en un métal, en particulier en aluminium ou en acier, ou en une combinaison de matière plastique et de métal.

8. Elément (20) selon l'une quelconque des revendications précédentes, **caractérisé en ce que** la partie de support présente un moyen de fixation (5), en particulier une pince, pour le placement et la fixation de l'élément de renforcement dans une cavité.

9. Utilisation de l'élément selon l'une quelconque des revendications 1 à 8 pour le renforcement dans des cavités de composants de structure dans des carrosseries et/ou des châssis de moyens de transport et de déplacement, en particulier de véhicules maritimes ou terrestres ou de véhicules aériens, de préférence d'automobiles, de camions, de véhicules ferroviaires, de bateaux, de navires, d'hélicoptères et d'avions.

10. Procédé d'introduction d'un élément de pénétration dans un élément (20) pour l'étanchéité ou le renforcement d'une cavité d'un élément de construction, en particulier d'un véhicule, dans lequel l'élément comprend un élément de support (1), une partie moussante (2), ainsi qu'une ouverture (5) destinée à recevoir l'élément de pénétration (6), **caractérisé en ce qu'**une aile (4) est disposée sur l'élément de support (1), **en ce que** l'ouverture (5) est ouverte latéralement, et **en ce qu'**un entraîneur (8) est disposé sur l'aile, **en ce que** l'on introduit l'élément de pénétration (6) dans l'aile et l'entraîneur, **en ce que** l'on pousse l'élément de pénétration dans l'ouverture (5) ouverte latéralement, l'aile (4) étant ainsi entraînée par l'entraîneur (8) et l'ouverture ouverte latéralement étant ainsi fermée par l'aile.

11. Procédé selon la revendication 10, **caractérisé en ce que** l'ouverture (5) ouverte latéralement entoure l'élément de pénétration (6) sur plus de la moitié de sa périphérie.

12. Procédé selon la revendication 10 ou 11, **caractérisé en ce que** l'aile (4) est maintenue en position fermée au moyen de l'entraîneur (8).

13. Procédé selon la revendication 10, 11 ou 12, **caractérisé en ce que** l'élément de pénétration est un élément tubulaire, en particulier un tuyau souple.
